# EUROPEAN PATENT SPECIFICATION

(11) **EP 4 187 871 B1**
(45) Date of publication and mention of the grant of the patent: **16.04.2025**
(21) Application number: 21213594.1
(22) Date of filing: 10.12.2021
(51) Int. Cl.: H04L 51/212

(54) **SYSTEM AND METHOD FOR IDENTIFYING A PHISHING EMAIL**
SYSTEM UND VERFAHREN ZUR IDENTIFIZIERUNG EINER PHISHING-E-MAIL
SYSTÈME ET PROCÉDÉ D'IDENTIFICATION DE COURRIEL D'HAMEÇONNAGE

(30) Priority: 29.11.2021 US 202117536281
(43) Date of publication of application: 31.05.2023
(73) Proprietor: AO Kaspersky Lab, Moscow 125212 (RU)
(72) Inventor: SLOBODYANUK, Yury G., 125212 MOSCOW (RU); DEDENOK, Roman A., 125212 MOSCOW (RU); GOLUBEV, Dmitry S., 125212 MOSCOW (RU); BENKOVICH, Nikita D., 125212 MOSCOW (RU); KOVALCHUK, Daniil M., 125212 MOSCOW (RU)
(74) Representative: Chimini, Francesco

(56) References cited:
- US-A1- 2020 067 861
- US-A1- 2020 389 486
- US-A1- 2021 281 606

## Description

### FIELD OF TECHNOLOGY

The present disclosure relates to the field of information security, e.g., by blocking phishing email messages.

### BACKGROUND

Phishing refers to a form of illegal activity intended to force a victim to share sensitive information, such as a password or credit card number. Most often, fraudsters try to deceive a user into visiting a fake site and entering their details - login name, password, or a Personal Identification Number (PIN) or code.

In order to induce a victim into visiting a fake site, attackers may use bulk or individually addressed email messages that masquerade as messages sent by a work colleague, a bank employee, or a representative of a government agency. However, these messages contain a malicious link. The text included in the message instructs or requires the victim to click on the link and immediately perform certain actions in order to avoid threats or some kind of serious consequences. Another approach fraudsters employ involves using an attachment in the form of a file that also contains malicious links or exploits vulnerable applications to further compromise the user's computer.

When the victim clicks on the link, he/she is taken to a phishing site where an invitation is extended to the victim to "log into the system" using his/her account details. Some scammers go even further by asking the victim to send copies of documents or photos establishing their identity. If the victim is sufficiently trusting and agrees, then the data transferred from the victim is sent directly to the attackers - thereby enabling the scammers to use the transferred data to steal confidential information or money.

Fraud detection schemes may be used to order to mitigate against these types of phishing attacks. There are two main types of fraud detection schemes. The first type of fraud detection scheme relates to schemes that detect phishing based on analysis of the contents of target web pages, that is, analysis of the web pages to which the emails are the attached documents are linked. The second type of fraud detection scheme relates to schemes that work directly with the contents of the email messages. While these first and second fraud detection schemes handle the tasks of recognizing targeted mailings that mimic emails from trusted senders, neither type is able to recognize phishing messages from unknown senders. In addition, the identification of a phishing message based on the degree of similarity of domains may discredit a legitimate sender. Instead, it is necessary to take a multi-level approach to reduce the number of attacks and reduce falsely identified phishing messages.

Therefore, there is a need for a method and a system for improving information security while blocking phishing emails in order to improve the systems and method disclosed in prior art documents US2021/281606, US2020/067861 and US2020/389486.

### SUMMARY

The present invention relates to information security, more specifically, to systems and methods of identifying phishing emails. According to the present invention, the systems and methods block phishing email messages using a multi-level approach - thereby reducing the number of attacks while simultaneously reducing the number of emails falsely identified as phishing emails.

According to the invention, a method is provided for identifying phishing emails as claimed in appended claim 1.

In one example, the method further comprises placing the suspicious email message into a temporary quarantine.

In one example, the first machine learning model is pre-trained on first attributes of email messages, the first attributes comprising at least attributes related to: a value of a Message_ID header of the email message; a value of an X-mail email header of the email message; and a sequence of values of headers of the email message.

In one example, the second machine learning model is pre-trained on second attributes of email messages, the second attributes comprising attributes related to at least one of: a reputation of a plurality of links which characterizes a probability that an email message contains a phishing link; a category of the email message; a flag indicating a presence of a domain of a sender in a previously created list of blocked senders; a flag indicating a presence of a domain of a sender in a previously created list of known senders; a degree of similarity of a domain of a sender with domains in a previously created list of known senders; a flag indicating a presence of an Hyper-Text Markup Language (HTML) code in a body of the email message; and a flag indicating a presence of a script inserted in a body of the email.

In one example, the reputation of the plurality of links is calculated using a recurrent neural network.

In one example, a category of the email message indicating whether or not the email message is a phishing message is based on N-grams of text of the email message, the N-grams being identified by selecting one or more important features that strongly influence a binary classification of the phishing email message.

In one example, a category of the email message indicating whether or not the email message is a phishing message is based on a logic regression algorithm with regularization, wherein the regularization allows weight coefficients to be determined for N-grams, the weight coefficient of a given N-gram characterizing a degree of influence of the N-gram on a classification of the email message as a phishing message.

In one example, the second machine learning model is based on at least one of the following learning algorithms: an algorithm based on a Bayesian classifier; a logistical regression algorithm; a modified random forest training algorithm; a support vector machine; an algorithm using nearest neighbor; and a decision tree based algorithm.

In one example, the taking of the action to provide information security against the identified phishing message comprises at least one of: blocking the phishing message; informing a recipient that the email message is a phishing message; and placing an identifier of phishing email in a database storing a list of malicious emails.

According to the invention, a system is provided for identifying phishing emails as claimed in appended claim 10.

The method and system of the present disclosure are designed to provide information security, in a more optimal and effective manner, enabling legitimate emails to proceed towards the recipient while blocking phishing emails. Thus, in one example, the technical result of the present disclosure includes the identification of a phishing email messages. In another example, the technical result includes reducing the number of email messages falsely identified as phishing emails. In yet another example, the technical result comprises providing information security by blocking phishing email messages.

### BRIEF DESCRIPTION OF THE DRAWINGS

The accompanying drawings, which are incorporated into and constitute a part of this specification, illustrate one or more examples of the present invention and, together with the detailed description, serve to explain their principles and implementations thereof.
**Fig. 1** illustrates a block diagram of an exemplary system for collecting and storing attributes of an email message.
**Fig. 2** illustrates a block diagram of an exemplary system used to implement a method for identifying a phishing email message.
**Fig. 3** illustrates a method for identifying a phishing email message.
**Fig. 4** presents an example of a general purpose computer system on which systems and methods disclosed herein can be implemented.

### DETAILED DESCRIPTION

Examples of the invention are described herein in the context of a system, method, and a computer program for identifying phishing emails. Those of ordinary skill in the art will realize that the following description is illustrative only and is not intended to be in any way limiting. Other examples will readily suggest themselves to those skilled in the art having the benefit of the disclosure. Reference will now be made in detail to implementations of the example embodiments of the invention as illustrated in the accompanying drawings. The same reference indicators will be used to the extent possible throughout the drawings and the following description to refer to the same or like items.

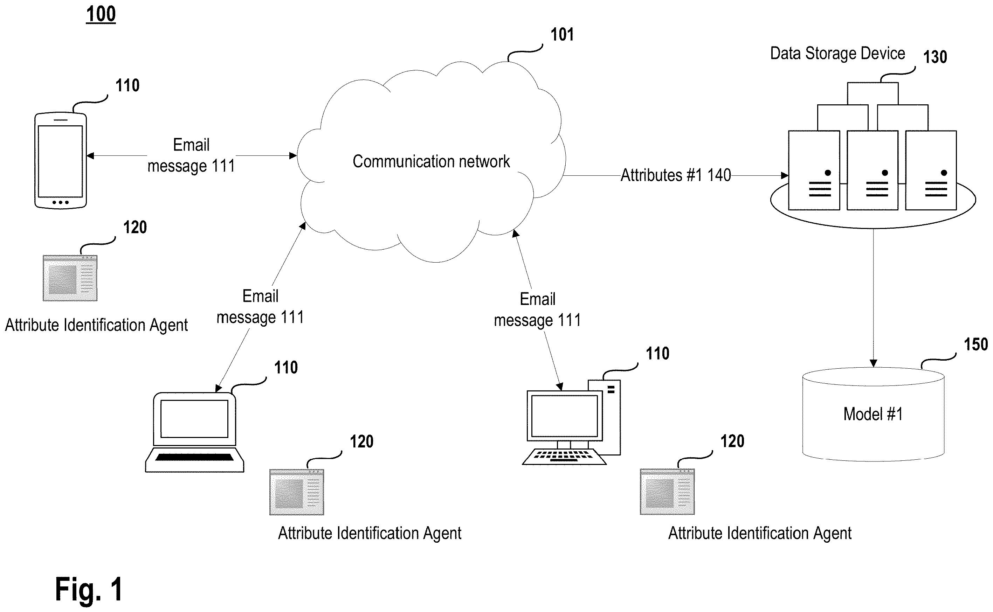

**Fig. 1** illustrates a block diagram of an exemplary system **100** for collecting and storing attributes of an email message. In one example, the block diagram of the example system for collecting and storing the attributes of an email message contains a communication network **101,** a user device **110,** an email message **111,** #1 attributes **140,** an attribute identification agent **120,** a data storage device **130,** and machine learning model #1 **150.**

The communication network **101** is a system of physical communication channels that implements an electronic message transfer protocol **111** between the terminal devices, as well as the transfer of #1 attributes **140** to the data storage device **130.**

The email message **111** has a specific structure. It contains a body and headers - ancillary information about the route taken by the emails. For example, the headers provide information about when and where the email came from and by which route, as well as information added to the email by various utility programs (mail clients).

In one example, the #1 attributes **140** include the values of the headers associated with routing information of the email **111,** and ancillary information generated by mail clients

For example, the #1 attributes **140** consist of at least:
- Message_ID: a unique identifier of the email message **111,** which is assigned by the first mail server that the message meets along its path;
- X-mailer (mailer_name): the value of the header field in which the email client or service that was used to create the email message **111** identifies itself; and
- the sequence of values of the headers of the email message **111.**

In one example, the user device **110** contains the mail client and the attribute identification agent **120.** Then, using the e-mail client, the user device **110** generates an email message **111** and sends it via the communication network **101,** and also receives an email message **111** from other devices.

In one example, the attribute identification agent **120** intercepts the email message **111** by at least one of:
- tracking the traffic received and transmitted via mail protocols (POP3, SMTP, IMAP, NNTP);
- tracking files in the mail server repositories; and
- tracking files in the mail client repositories.

In one example, the attribute identification agent **120** identifies #1 attributes **140** contained in the intercepted email message **111** and transfers them to the data storage device **130** via the communication network **101.**

In one example, the data storage device **130** is designed to collect, store, and process the #1 attributes **140.** For example, the #1 attributes **140** are used to train the machine learning model #1 stored in database **150.**

The storage device **130** is a cloud storage device that handles the #1 attributes **140** in the so-called cloud, where the cloud is a storage model that provides internet-based data storage by means of a cloud computing resource provider that provides and manages data storage as a service. For example, the data storage device **130** may be a tool containing the Kaspersky Security Network (KSN) system from the Kaspersky Lab company.

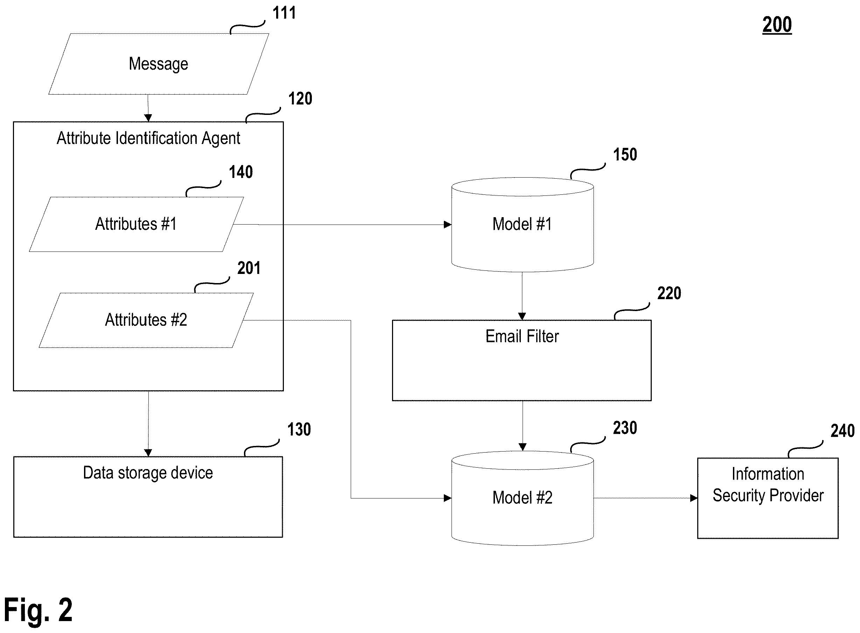

**Fig. 2** illustrates a block diagram **200** of an exemplary system used to implement a method for identifying a phishing email message. In one example, the block diagram **200** of the system for identifying a phishing email contains an email message **111,** an attribute identification agent **120,** a data storage device **130,** #1 attributes **140,** #2 attributes **201,** a machine learning model #1 stored in database **150,** an email filter **220,** a machine learning model #2 stored in database **230,** and an information security provider **240.**

The attribute identification agent **120** is designed to intercept the email message **111,** identify the #1 attributes **140,** the #2 attributes **201,** and to transfer the #1 attributes **140** to a data storage device **130.**

In one example, the #1 attributes **140** consist of at least one of:
- a value of a Message_ID header of the email message **111;**
- a value of an X-mailer (mailer_name) header of the email message **111;** and
- a sequence of values of headers of the email message **111.**

The machine learning model #1 stored in database **150** is designed to classify an email message **111** based on the #1 attributes **140.** In one example, the machine learning model #1 classifies the email message **111** as at least as one of:
- suspicious (e.g., containing spam, a malicious attachment, or a phishing link); and
- genuine.

In one example, the machine learning model #1 stored in database **150** has been pre-trained using the #1 attributes **140** transferred to the data storage device **130,** such that the machine learning model #1 stored in database **150** identifies, based on the specified attributes, the features with which an email message **111** is classified with a certain probability.

According to the invention, the machine learning model #1 can be based on deep learning methods. In particular, the #1 attributes **140** are represented as a matrix, where each symbol of a #1 attribute **140** is encoded by a fixed-length vector of numbers, and is transformed using a neural network that calculates the degree of similarity of the specified attributes with the attributes of suspicious messages. The features are formed by the #1 attributes **140** transformed by the neural network layer.

The email filter **220** is designed to place an email message **111,** which has been classified as suspicious by machine learning model #1 stored in database **150,** into temporary quarantine.

In one example, the email filter **220** temporarily quarantines an email **111** that has a higher degree of similarity to a suspicious message than a predefined value (for example, 0.7).

In one example, the machine learning model #2 stored in database **230** is designed to classify a suspicious email message based on the #2 attributes **201.** The machine learning model #2 classifies a suspicious email message as at least one of:
- a phishing email; and
- an unknown email.

In one example, the #2 attributes **201** consist of at least one of:
- a reputation of a plurality of links which characterizes a probability that an email message contains a phishing link;
- a category of the email message;
- a flag indicating a presence of a domain of a sender in a previously created list of blocked senders;
- a flag indicating a presence of a domain of a sender in a previously created list of known senders;
- a degree of similarity of a domain of a sender with domains in a previously created list of known senders;
- a flag indicating a presence of an Hyper-Text Markup Language (HTML) code in a body of the email message; and
- a flag indicating a presence of a script inserted in a body of the email.

In one example, the attribute identification agent **120** calculates the reputation of the plurality of links using a recurrent neural network (RNN).

For example, the attribute identification agent **120** encodes the URL address string of the link as a matrix of numbers (in particular, encodes each symbol of the URL as a fixed-length vector), and then passes the encoded string to the recurred neural network. The network extracts structural and semantic features from the URL address, and then uses the activation function to calculate the degree of similarity of the extracted features to corresponding features of phishing URLs. As a result, the reputation of the link consists of the probability that the link URL address will be associated with phishing URLs.

In another example, the reputation of a plurality of links consists of a measure of the central trend of the reputations of a plurality of links.

In one example, the category of the email message for determining whether or not the email message is a phishing message is based on N-grams of text of the email message, the N-grams being identified by selecting the most important features that most strongly influence a binary classification of a phishing email message.

For example, in phishing email messages, the following trigrams are often encountered: "Account will be blocked", "you won money", "change password urgently", which appeal to the emotions of the recipient.

In another example, a phishing message is classified on the basis of a logistic regression algorithm with regularization. For example, the text of a message from a training sample is broken down into N-grams of a predetermined length. These N-grams are used as features for training the classification model of a phishing email message based on a logic regression algorithm with L1-regularization. The use of L1-regularization allows the weight coefficient of each N-gram to be determined, which characterizes the degree of influence of each N-gram on the classification result. N-grams with a weight coefficient greater than a predefined value (for example, greater than 0) are used as the message category.

In one example, attributes of email messages belonging to a known class of messages (for example, phishing) are collected in advance. Based on the collected data, the classification machine learning model #2 stored in database **230** is trained in such a way that messages with similar attributes can be classified by the aforementioned machine learning model with an accuracy greater than a specified value.

The classification algorithm consists of at least one of the following algorithms (or a combination of them):
- Bayesian classifiers (naive Bayesian classifiers);
- logistical regression;
- MRF classifier;
- support vector machine (SVM);
- methods based on nearest neighbors (k-nearest neighbor); and
- decision tree.

In one of the embodiments, the system additionally comprises an information security provider **240,** which is designed to ensure information security.

In one example, the providing of the information security includes at least:
- blocking a phishing email message;
- informing the recipient of the phishing nature of the email message; and
- placing an identifier of the phishing email in a database of malicious email messages.

For example, the information security provider **240** is formed by the security application module supplied by Kaspersky Lab (for example, Kaspersky Internet Security).

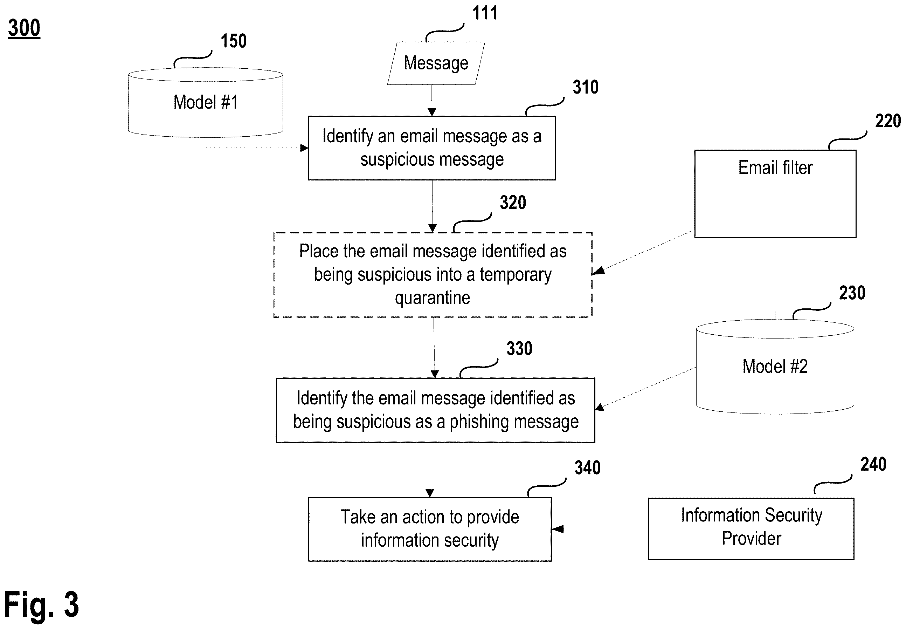

**Fig. 3** illustrates a method **300** for identifying a phishing email message. The method **300** comprises a step **310,** in which the email is identified as suspicious, a step **320,** in which an email identified as suspicious is placed in temporary quarantine, a step **330,** in which a phishing email is identified, and a step **340,** in which the information security is provided.

In step **310,** method **300** identifies an email message as a suspicious email message. The method **300** applies a machine learning model #1 stored in the database **150** to identify emails as being suspicious email messages.

In optional step **320,** method **300** places an email message identified as a suspicious email message into a temporary quarantine. For example, the method **300** uses an email filter **220** to filter emails for placing to a temporary quarantine.

In step **330,** method **300** identifies the suspicious email message (as identified in step **310**) as a phishing message. For example, the method **300** applies a machine learning model #2 stored in database **230** to determine whether or not the suspicious email message is a phishing message.

In step **340,** method **300** takes an action to provide information security against the identified phishing message. The action to provide information security is taken using the information security provider **240.**

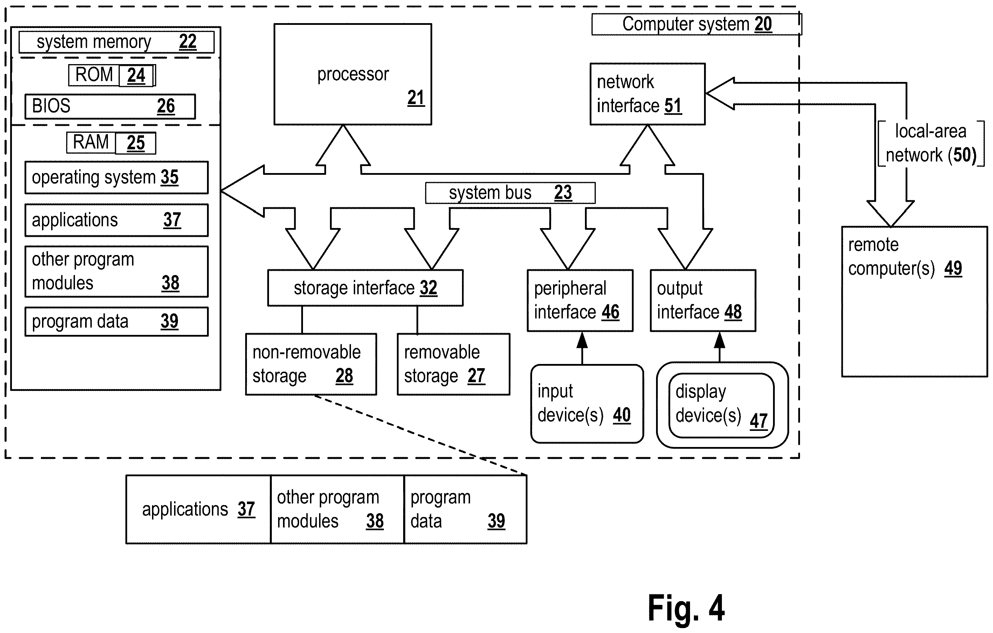

**Fig. 4** is a block diagram illustrating a computer system 20 on which systems and methods for identifying phishing emails may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computerexecutable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Embodiments of the present invention may be implemented as a system, a method, and/or a computer program product. The computer program product may include a computer readable storage medium (or media) having computer readable program instructions thereon for causing a processor to carry out embodiments of the present invention.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform embodiments of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 4****,** above). Accordingly, each module may be realized in a variety of suitable configurations, and should not be limited to any particular implementation exemplified herein.

In the interest of clarity, not all of the routine features of the invention are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and timeconsuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible as long as they fall within the scope of protection of the appended claims.

## Claims

1. A method (300) for identifying a phishing email message, the method comprising:
identifying (310) an email message as a suspicious email message by applying a first machine learning model, wherein the first machine learning model is pre-trained on first attributes of email messages, wherein the first attributes are represented as a matrix, where each symbol of each of the first attribute is encoded by a fixed-length vector of numbers and is transformed using a neural network configured to calculate a degree of similarity of the first attributes with attributes of suspicious messages;
identifying (330) the suspicious email message as a phishing message by applying a second machine learning model; and
taking an action (340) to provide information security against the identified phishing message.

2. The method according to claim 1, further comprising:
placing (320) the suspicious email message into a temporary quarantine.

3. The method according to any of claims 1 to 2, wherein the first attributes comprising at least attributes related to:
a value of a Message_ID header of the email message;
a value of an X-mail email header of the email message; and
a sequence of values of headers of the email message.

4. The method according to any of claims 1 to 3, wherein the second machine learning model is pre-trained on second attributes of email messages, the second attributes comprising attributes related to at least one of:
a reputation of a plurality of links which characterizes a probability that an email message contains a phishing link;
a category of the email message;
a flag indicating a presence of a domain of a sender in a previously created list of blocked senders;
a flag indicating a presence of a domain of a sender in a previously created list of known senders;
a degree of similarity of a domain of a sender with domains in a previously created list of known senders;
a flag indicating a presence of an Hyper-Text Markup Language (HTML) code in a body of the email message; and
a flag indicating a presence of a script inserted in a body of the email.

5. The method according to claim 4, wherein the reputation of the plurality of links is calculated using a recurrent neural network.

6. The method according to any of claims 1 to 5, wherein a category of the email message indicating whether or not the email message is a phishing message is based on N-grams of text of the email message, the N-grams being identified by selecting one or more important features that strongly influence a binary classification of the phishing email message.

7. The method according to any of claims 1 to 6, wherein a category of the email message indicating whether or not the email message is a phishing message is based on a logic regression algorithm with regularization, wherein the regularization allows weight coefficients to be determined for N-grams, the weight coefficient of a given N-gram characterizing a degree of influence of the N-gram on a classification of the email message as a phishing message.

8. The method according to any of claims 1 to 7, wherein the second machine learning model is based on at least one of the following learning algorithms:
an algorithm based on a Bayesian classifier;
a logistical regression algorithm;
a modified random forest training algorithm;
a support vector machine;
an algorithm using nearest neighbor; and
a decision tree based algorithm.

9. The method according to any of claims 1 to 8, wherein the taking of the action to provide information security against the identified phishing message comprises at least one of:
blocking the phishing message;
informing a recipient that the email message is a phishing message; and
placing an identifier of phishing email in a database storing a list of malicious emails.

10. A system (20) for identifying a phishing email message, comprising:
at least one processor configured to:
identify (310) an email message as a suspicious email message by applying a first machine learning model, wherein the first machine learning model is pre-trained on first attributes of email messages, wherein the first attributes are represented as a matrix, where each symbol of each of the first attribute is encoded by a fixed-length vector of numbers and is transformed using a neural network configured to calculate a degree of similarity of the first attributes with attributes of suspicious messages;
identify (330) the suspicious email message as a phishing message by applying a second machine learning model; and
take an action (340) to provide information security against the identified phishing message.

11. The system according to claim 10, the processor further configured to:
place (320) the suspicious email message into a temporary quarantine.

12. The system according to any of claims 10 to 11, the first attributes comprising at least attributes related to:
a value of a Message_ID header of the email message;
a value of an X-mail email header of the email message; and
a sequence of values of headers of the email message.

13. The system according to any of claims 10 to 12, wherein the second machine learning model is pre-trained on second attributes of email messages, the second attributes comprising attributes related to at least one of:
a reputation of a plurality of links which characterizes a probability that an email message contains a phishing link;
a category of the email message;
a flag indicating a presence of a domain of a sender in a previously created list of blocked senders;
a flag indicating a presence of a domain of a sender in a previously created list of known senders;
a degree of similarity of a domain of a sender with domains in a previously created list of known senders;
a flag indicating a presence of an Hyper-Text Markup Language (HTML) code in a body of the email message; and
a flag indicating a presence of a script inserted in a body of the email.

14. The system according to claim 13, wherein the reputation of the plurality of links is calculated using a recurrent neural network.

15. The system according to any of claims 10 to 14, wherein a category of the email message indicating whether or not the email message is a phishing message is based on N-grams of text of the email message, the N-grams being identified by selecting one or more important features that strongly influence a binary classification of the phishing email message.

## Patentansprüche

1. Verfahren (300) zum Identifizieren einer Phishing-E-Mail-Nachricht, wobei das Verfahren umfasst:
Identifizieren (310) einer E-Mail-Nachricht als verdächtige E-Mail-Nachricht durch Anwenden eines ersten maschinellen Lernmodells, wobei das erste maschinelle Lernmodell auf erste Attribute von E-Mail-Nachrichten vortrainiert ist, wobei die ersten Attribute als Matrix dargestellt werden, bei der jedes Symbol jedes der ersten Attribute durch einen Zahlenvektor fester Länge kodiert wird und unter Verwendung eines neuronalen Netzes transformiert wird, das konfiguriert ist, einen Ähnlichkeitsgrad der ersten Attribute zu Attributen von verdächtigen Nachrichten zu berechnen;
Identifizieren (330) der verdächtigen E-Mail-Nachricht als Phishing-Nachricht durch Anwenden eines zweiten maschinellen Lernmodells; und
Ergreifen einer Maßnahme (340) zum Bereitstellen von Informationssicherheit gegen die identifizierte Phishing-Nachricht.

2. Verfahren nach Anspruch 1, ferner umfassend:
Platzieren (320) der verdächtigen E-Mail-Nachricht in einer temporären Quarantäne.

3. Verfahren nach einem der Ansprüche 1 bis 2, wobei die ersten Attribute zumindest Attribute umfassen, die bezogen sind auf:
einen Wert eines Message_ID-Headers der E-Mail-Nachricht;
einen Wert eines X-Mail-E-Mail-Headers der E-Mail-Nachricht; und
eine Sequenz von Werten von Headern der E-Mail-Nachricht.

4. Verfahren nach einem der Ansprüche 1 bis 3, wobei das zweite maschinelle Lernmodell auf zweite Attribute von E-Mail-Nachrichten vortrainiert ist, wobei die zweiten Attribute Attribute umfassen, die bezogen sind auf zumindest eines von:
einer Reputation einer Mehrzahl von Links, die eine Wahrscheinlichkeit charakterisiert, dass eine E-Mail-Nachricht einen Phishing-Link enthält;
einer Kategorie der E-Mail-Nachricht;
einem Flag, das ein Vorhandensein einer Domain eines Absenders in einer zuvor erstellten Liste blockierter Absender angibt;
einem Flag, das ein Vorhandensein einer Domain eines Absenders in einer zuvor erstellten Liste bekannter Absender angibt;
einem Ähnlichkeitsgrad einer Domain eines Absenders zu Domains in einer zuvor erstellten Liste bekannter Absender;
einem Flag, das ein Vorhandensein eines Hyper-Text Markup Language (HTML)-Codes in einem Body der E-Mail-Nachricht angibt; und
einem Flag, das ein Vorhandensein eines Skripts angibt, das in einen Body der E-Mail eingefügt wurde.

5. Verfahren nach Anspruch 4, wobei die Reputation der Mehrzahl von Links unter Verwendung eines rekurrenten neuronalen Netzes berechnet wird.

6. Verfahren nach einem der Ansprüche 1 bis 5, wobei eine Kategorie der E-Mail-Nachricht, die angibt, ob es sich bei der E-Mail-Nachricht um eine Phishing-Nachricht handelt oder nicht, auf N-Grammen von Text der E-Mail-Nachricht basiert, wobei die N-Gramme durch Auswählen eines oder mehrerer wichtiger Merkmale identifiziert werden, die eine binäre Klassifizierung der Phishing-E-Mail-Nachricht stark beeinflussen.

7. Verfahren nach einem der Ansprüche 1 bis 6, wobei eine Kategorie der E-Mail-Nachricht, die angibt, ob es sich bei der E-Mail-Nachricht um eine Phishing-Nachricht handelt oder nicht, auf einem logischen Regressionsalgorithmus mit Regularisierung basiert, wobei die Regularisierung eine Bestimmung von Gewichtungskoeffizienten für N-Gramme ermöglicht, wobei der Gewichtungskoeffizient eines gegebenen N-Gramms einen Grad des Einflusses des N-Gramms auf eine Klassifizierung der EMail-Nachricht als Phishing-Nachricht charakterisiert.

8. Verfahren nach einem der Ansprüche 1 bis 7, wobei das zweite maschinelle Lernmodell auf zumindest einem der folgenden Lernalgorithmen basiert:
einem Algorithmus, der auf einem Bayes-Klassifikator basiert;
einem logistischen Regressionsalgorithmus;
einem modifizierten Random-Forest-Trainingsalgorithmus;
einer Support Vector Machine;
einem Algorithmus, der den Nearest Neighbor verwendet; und
einem auf einem Entscheidungsbaum basierenden Algorithmus.

9. Verfahren nach einem der Ansprüche 1 bis 8, wobei das Ergreifen der Maßnahme zum Bereitstellen von Informationssicherheit gegen die identifizierte Phishing-Nachricht zumindest eine umfasst von:
Blockieren der Phishing-Nachricht;
Informieren eines Empfängers, dass es sich bei der E-Mail-Nachricht um eine Phishing-Nachricht handelt; und
Platzieren einer Kennung der Phishing-E-Mail in einer Datenbank, die eine Liste bösartiger E-Mails speichert.

10. System (20) zum Identifizieren einer Phishing-E-Mail-Nachricht, umfassend:
zumindest einen Prozessor, der konfiguriert ist zum:
eine E-Mail-Nachricht als verdächtige E-Mail-Nachricht durch Anwenden eines ersten maschinellen Lernmodells zu identifizieren (310), wobei das erste maschinelle Lernmodell auf erste Attribute von E-Mail-Nachrichten vortrainiert ist, wobei die ersten Attribute als Matrix dargestellt werden, bei der jedes Symbol jedes der ersten Attribute durch einen Zahlenvektor fester Länge kodiert wird und unter Verwendung eines neuronalen Netzes transformiert wird, das konfiguriert ist, einen Ähnlichkeitsgrad der ersten Attribute zu Attributen von verdächtigen Nachrichten zu berechnen;
die verdächtige E-Mail-Nachricht als Phishing-Nachricht durch Anwenden eines zweiten maschinellen Lernmodells zu identifizieren (330); und
eine Maßnahme zum Bereitstellen von Informationssicherheit gegen die identifizierte Phishing-Nachricht zu ergreifen (340).

11. System nach Anspruch 10, wobei der Prozessor ferner konfiguriert ist:
die verdächtige E-Mail-Nachricht in einer temporären Quarantäne zu platzieren (320).

12. System nach einem der Ansprüche 10 bis 11, wobei die ersten Attribute zumindest Attribute umfassen, die bezogen sind auf:
einen Wert eines Message_ID-Headers der E-Mail-Nachricht;
einen Wert eines X-Mail-E-Mail-Headers der E-Mail-Nachricht; und
eine Sequenz von Werten von Headern der E-Mail-Nachricht.

13. System nach einem der Ansprüche 10 bis 12, wobei das zweite maschinelle Lernmodell auf zweite Attribute von E-Mail-Nachrichten vortrainiert ist, wobei die zweiten Attribute Attribute umfassen, die bezogen sind auf zumindest eines von:
einer Reputation einer Mehrzahl von Links, die eine Wahrscheinlichkeit charakterisiert, dass eine E-Mail-Nachricht einen Phishing-Link enthält;
einer Kategorie der E-Mail-Nachricht;
einem Flag, das ein Vorhandensein einer Domain eines Absenders in einer zuvor erstellten Liste blockierter Absender angibt;
einem Flag, das ein Vorhandensein einer Domain eines Absenders in einer zuvor erstellten Liste bekannter Absender angibt;
einem Ähnlichkeitsgrad einer Domain eines Absenders zu Domains in einer zuvor erstellten Liste bekannter Absender;
einem Flag, das ein Vorhandensein eines Hyper-Text Markup Language (HTML)-Codes in einem Body der E-Mail-Nachricht angibt; und
einem Flag, das ein Vorhandensein eines Skripts angibt, das in einen Body der E-Mail eingefügt wurde.

14. System nach Anspruch 13, wobei die Reputation der Mehrzahl von Links unter Verwendung eines rekurrenten neuronalen Netzes berechnet wird.

15. System nach einem der Ansprüche 10 bis 14, wobei eine Kategorie der E-Mail-Nachricht, die angibt, ob es sich bei der E-Mail-Nachricht um eine Phishing-Nachricht handelt oder nicht, auf N-Grammen von Text der E-Mail-Nachricht basiert, wobei die N-Gramme durch Auswählen eines oder mehrerer wichtiger Merkmale identifiziert werden, die eine binäre Klassifizierung der Phishing-E-Mail-Nachricht stark beeinflussen.

## Revendications

1. Procédé (300) d'identification d'un message de courrier électronique d'hameçonnage, le procédé comprenant :
l'identification (310) d'un message de courrier électronique en tant que message de courrier électronique suspect en appliquant un premier modèle d'apprentissage automatique, dans lequel le premier modèle d'apprentissage automatique est préentraîné sur des premiers attributs de messages de courrier électronique, dans lequel les premiers attributs sont représentés sous forme de matrice, dans lequel chaque symbole de chacun des premiers attributs est codé par un vecteur de nombres de longueur fixe et est transformé en utilisant un réseau neuronal configuré pour calculer un degré de similarité des premiers attributs avec des attributs de messages suspects ;
l'identification (330) du message de courrier électronique suspect comme un message d'hameçonnage en appliquant un second modèle d'apprentissage automatique ; et
la prise d'une mesure (340) pour fournir une sécurité d'informations contre le message d'hameçonnage identifié.

2. Procédé selon la revendication 1, comprenant en outre :
le placement (320) du message de courrier électronique suspect dans une quarantaine temporaire.

3. Procédé selon l'une quelconque des revendications 1 à 2, dans lequel les premiers attributs comprennent au moins des attributs liés à :
une valeur d'un en-tête Message_ID du message de courrier électronique;
une valeur d'un en-tête de courrier électronique X-mail du message de courrier électronique ; et une séquence de valeurs d'en-têtes du message de courrier électronique.

4. Procédé selon l'une quelconque des revendications 1 à 3, dans lequel le second modèle d'apprentissage automatique est préentraîné sur des seconds attributs de messages de courrier électronique, les seconds attributs comprenant des attributs liés à au moins l'un des éléments suivants :
une réputation d'une pluralité de liens qui caractérise une probabilité qu'un message de courrier électronique contienne un lien d'hameçonnage ;
une catégorie du message de courrier électronique ;
un drapeau indiquant une présence d'un domaine d'un expéditeur dans une liste d'expéditeurs bloqués précédemment créée ;
un drapeau indiquant une présence d'un domaine d'un expéditeur dans une liste d'expéditeurs connus précédemment créée ;
un degré de similitude d'un domaine d'un expéditeur avec des domaines d'une liste d'expéditeurs connus créée précédemment ;
un drapeau indiquant une présence d'un code de langage de balisage hypertexte (HTML) dans un corps du message de courrier électronique ; et
un drapeau indiquant une présence d'un script inséré dans un corps du message.

5. Procédé selon la revendication 4, dans lequel la réputation de la pluralité de liens est calculée en utilisant un réseau neuronal récurrent.

6. Procédé selon l'une quelconque des revendications 1 à 5, dans lequel une catégorie du message de courrier électronique indiquant si le message de courrier électronique est ou non un message d'hameçonnage est basée sur des N-grammes de texte du message de courrier électronique, les N-grammes étant identifiés en sélectionnant une ou plusieurs caractéristiques importantes qui influencent fortement une classification binaire du message de courrier électronique d'hameçonnage.

7. Procédé selon l'une quelconque des revendications 1 à 6, dans lequel une catégorie du message de courrier électronique indiquant si le message de courrier électronique est ou non un message d'hameçonnage est basée sur un algorithme de régression logique avec régularisation, dans lequel la régularisation permet de déterminer des coefficients de pondération pour des N-grammes, le coefficient de pondération d'un N-gramme donné caractérisant un degré d'influence du N-gramme sur une classification du message de courrier électronique en tant que message d'hameçonnage.

8. Procédé selon l'une quelconque des revendications 1 à 7, dans lequel le second modèle d'apprentissage automatique est basé sur au moins l'un des algorithmes d'apprentissage suivants :
un algorithme basé sur un classificateur bayésien ;
un algorithme de régression logistique ;
un algorithme d'entraînement de forêt aléatoire modifié ;
une machine à vecteurs de support ;
un algorithme utilisant le voisin le plus proche ; et
un algorithme basé sur un arbre décisionnel.

9. Procédé selon l'une quelconque des revendications 1 à 8, dans lequel la prise de la mesure pour fournir une sécurité d'informations contre le message d'hameçonnage identifié comprend au moins un parmi :
le blocage du message d'hameçonnage ;
l'information d'un destinataire que le message de courrier électronique est un message d'hameçonnage ; et
le placement d'un identifiant de courrier électronique d'hameçonnage dans une base de données stockant une liste de courriers électroniques malveillants.

10. Système (20) d'identification d'un message de courrier électronique d'hameçonnage, comprenant :
au moins un processeur configuré pour :
identifier (310) un message de courrier électronique en tant que message de courrier électronique suspect en appliquant un premier modèle d'apprentissage automatique, dans lequel le premier modèle d'apprentissage automatique est préentraîné sur des premiers attributs de messages de courrier électronique, dans lequel les premiers attributs sont représentés sous forme de matrice, dans lequel chaque symbole de chacun des premiers attributs est codé par un vecteur de nombres de longueur fixe et est transformé en utilisant un réseau neuronal configuré pour calculer un degré de similarité des premiers attributs avec des attributs de messages suspects ;
identifier (330) le message de courrier électronique suspect comme un message d'hameçonnage en appliquant un second modèle d'apprentissage automatique ; et
prendre une mesure (340) pour fournir une sécurité d'informations contre le message d'hameçonnage identifié.

11. Système selon la revendication 10, le processeur étant en outre configuré pour :
placer (320) le message de courrier électronique suspect dans une quarantaine temporaire.

12. Système selon l'une quelconque des revendications 10 à 11, les premiers attributs comprenant au moins des attributs liés à :
une valeur d'un en-tête Message_ID du message de courrier électronique;
une valeur d'un en-tête de courrier électronique X-mail du message de courrier électronique ; et
une séquence de valeurs d'en-têtes du message de courrier électronique.

13. Système selon l'une quelconque des revendications 10 à 12, dans lequel le second modèle d'apprentissage automatique est préentraîné sur de seconds attributs de messages de courrier électronique, les seconds attributs comprenant des attributs liés à au moins l'un des éléments suivants :
une réputation d'une pluralité de liens qui caractérise une probabilité qu'un message de courrier électronique contienne un lien d'hameçonnage ;
une catégorie du message de courrier électronique ;
un drapeau indiquant une présence d'un domaine d'un expéditeur dans une liste d'expéditeurs bloqués précédemment créée ;
un drapeau indiquant une présence d'un domaine d'un expéditeur dans une liste d'expéditeurs connus précédemment créée ;
un degré de similitude d'un domaine d'un expéditeur avec des domaines d'une liste d'expéditeurs connus créée précédemment ;
un drapeau indiquant une présence d'un code de langage de balisage hypertexte (HTML) dans un corps du message de courrier électronique ; et
un drapeau indiquant une présence d'un script inséré dans un corps du message.

14. Système selon la revendication 13, dans lequel la réputation de la pluralité de liens est calculée en utilisant un réseau neuronal récurrent.

15. Système selon l'une quelconque des revendications 10 à 14, dans lequel une catégorie du message de courrier électronique indiquant si le message de courrier électronique est ou non un message d'hameçonnage est basée sur des N-grammes de texte du message de courrier électronique, les N-grammes étant identifiés en sélectionnant une ou plusieurs caractéristiques importantes qui influencent fortement une classification binaire du message de courrier électronique d'hameçonnage.
